## Europäisches Patentamt
## European Patent Office
## Office européen des brevets

(11) Veröffentlichungsnummer: **0 175 923**
**B1**

(12) **EUROPÄISCHE PATENTSCHRIFT**

(45) Veröffentlichungstag der Patentschrift:
**01.06.88**

(51) Int. Cl.⁴: **H 01 M 2/04,** B 29 C 65/14

(21) Anmeldenummer: **85110491.9**

(22) Anmeldetag: **21.08.85**

(54) **Deckel für Akkumulatorenzellen.**

(30) Priorität: **22.09.84 DE 3434902**

(43) Veröffentlichungstag der Anmeldung:
**02.04.86 Patentblatt 86/14**

(45) Bekanntmachung des Hinweises auf die Patenterteilung:
**01.06.88 Patentblatt 88/22**

(84) Benannte Vertragsstaaten:
**AT DE FR**

(56) Entgegenhaltungen:
**EP - A - 0 028 116**
**BE - A - 683 683**
**FR - A - 1 308 071**
**FR - A - 2 032 097**
**US - A - 3 276 913**

(73) Patentinhaber: **VARTA Batterie Aktiengesellschaft, Am Leineufer 51, D-3000 Hannover 21 (DE)**

(72) Erfinder: **Bechtold, Dieter, Dipl.-Ing., Am Wetterhahn 2, D-6000 Frankfurt 56 (DE)**
Erfinder: **Eckardt, Rudolf, Obergasse 30, D-6374 Steinbach (DE)**

(74) Vertreter: **Kaiser, Dieter Ralf, Dipl.-Ing., Gundelhardtstrasse 72, D-6233 Kelkheim/Ts. (DE)**

## Beschreibung

Die Erfindung betrifft einen Deckel zum Verschliessen eines Behälters aus thermoplastischem Kunststoff für Akkumulatorenzellen, dessen Rand entlang seiner horizontalen Unterseite mit der horizontalen Oberkante des Behälters mittels Strahlungswärme erhitzt und verschweisst wird. Solch ein Deckel ist aus der EP-A-28 116 bekannt.

Zum gegenseitigen Abdichten von Zellendeckeln und -gefässen sind neben der Methode des Verklebens vor allem das Ultraschallverschweissen und das Spiegelschweissen in Gebrauch. die zum Schmelzen erforderliche Wärme kann aber auch als Strahlungswärme, etwa aus einem Glühdraht, an die zu verbindenden Flächen herangebracht werden. In allen Fällen ist eine zuverlässige Rundum-Abdichtung des Zellengefässes oder Blockkastens, die auch extremen Temperaturschwankungen und Rüttelbeanspruchungen gewachsen ist, das wünschenswerte Ziel.

Für das Ultraschallschweissen sind Behälterstrukturen mit ineinandergreifenden Zungen und Auskehlungen weniger günstig, weil diese das Durchdringungsvermögen der Ultraschallwellen schwächen. Beim Spiegelschweissen muss der Schweissspiegel der Ebenenkontur des Behälterrandes, auf den der Deckel aufgeschweisst werden soll, genau angepasst sein und ausserdem zumindest Durchlassöffnungen für die Zellenpole besitzen, da diese aus dem Innern des Behälters über die Verschweissungsebene hinausragen.

Bei der Batteriekasten-Verdeckelung nach dem Prinzip des Spiegelschweissens ist gemäss der EP-A-28 116 der sonst einstückige Schweissspiegel in vier Heizblätter aufgeteilt, die paarweise aus jeweils gegenüberliegenden Positionen an die Längs- bzw. Breitseiten des Kastens herangefahren werden und sich erst in der Arbeitsstellung, bei der ihre Vorderkanten zwischen Behälterrand und Deckelrand eingreifen, zu einem Heizring schliessen. Durch eine besondere Ausstattung der Deckelunterseite mit Führungsstiften zur exakten Auflage des Deckels und einer die Stifte miteinander verbindenden, hinter deren äussere Fluchtlinie jedoch etwas zurückgesetzte Leiste wird zwischen dieser und der Innenkante des Behälters ein schmaler senkrechter Spalt geschaffen, in welchen hinein schmelzflüssiges Material aus der eigentlichen horizontalen Schweisszone ausweichen kann, so dass sich dort eine zusätzliche Schweisszone bildet.

Diese bekannte Arbeitsmethode ist wegen ihres hohen Automatisierungsgrades mit einem ausserordentlichen maschinellen und steuerungstechnischen Aufwand gekoppelt und nur für dickwandige Gefässe geeignet.

Der Erfindung liegt die Aufgabe zugrunde, zum thermischen Verbinden von dünnwandigen Deckeln und Behältern, welches mittels eines wenig aufwendigen Glühdrahtes oder Heizbandes erfolgen soll, eine Deckelkonstruktion anzugeben, die die Effizienz und damit die Dichtigkeit der Verschweissung begünstigt.

Die Aufgabe wird erfindungsgemäss durch die im kennzeichnenden Teil des Anspruchs 1 angegebenen Massnahmem gelöst.

Anhand zweier Figuren soll der Erfindungsgegenstand näher erläutert werden.

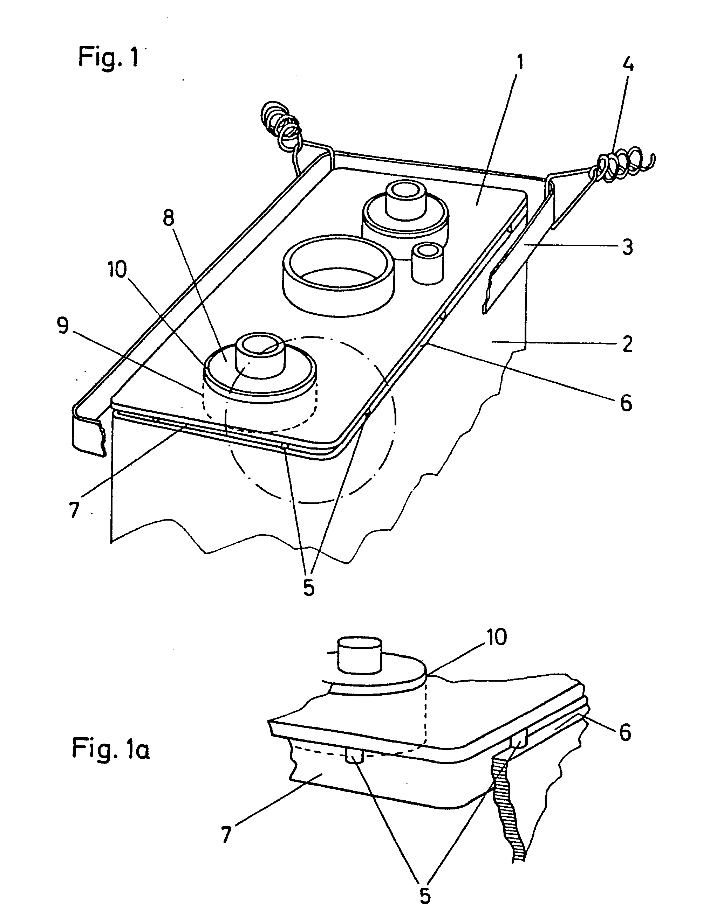

Fig. 1 zeigt einen erfindungsgemässen Deckel nebst zugehörigem Behälter in der Positionierung vor dem Verschweissen.

Fig. 1a zeigt einen vergrösserten Ausschnitt aus der Fig. 1 im Aufriss.

Deckel 1 und Behälter 2 der Fig. 1 sind aus gleichen thermoplastischen Materialien gefertigt. In gleichmässigem Abstand rings um die Schweisszone herum ist ein Glühdraht oder Heizband 3 angeordnet und an elektrisch wie auch wärmetechnisch isolierten Federelementen 4 so aufgehängt, dass die Wärmeausdehnung sich gleichmässig auf alle Längenabschnitte verteilt bzw. durch die Federwirkung ggf. ausgeglichen werden kann. So ist insbesondere während der Aufheizperiode auch die Einhaltung gleichbleibender Abstände zu den Werkstücken möglich.

Für eine durchgehende Verschweissung von Deckel und Behälter ist es unumgänglich, dass der Erweichungsvorgang auch die Innenseite der Verbindung mit erfasst. Erfindungsgemäss wird dies durch an die Unterseite des Deckelrandes angespritzte Noppen 5 erreicht, welche sich über den Umfang des Deckels verteilen und dafür sorgen, dass beim Auflegendes Deckels auf den Behälter zunächst ein Abstand zu dessen Oberkante 6 verbleibt. Die im übrigen montagegerechte Positionierung des Deckels ist durch eine an der Deckelunterseite umlaufende Führungsleiste 7 sichergestellt. Sie wird ausserdem durch die passgenaue Einführung der Batteriepole 8 in die entsprechenden Deckeltuben 9 (versenkt) gewährleistet, da zwischen den Deckeltuben und der Kunststoffumspritzung 10 der Pole bereits ein reibschlüssiger Kontakt besteht. Die Noppen stehen somit exakt auf der Oberkante des Behälterrandes auf und bewirken als Abstandshalter zwischen Gefäss und Deckel, dass in der Aufheizphase die vom Heizband abgestrahlte Wärme auch zwischen die Teile eindringen kann. Nach der erfolgten Erweichung der zu verschweissenden Flächen, die auch die Noppen erfasst, werden Gefäss und Deckel aufeinandergepresst. Die Noppen werden dabei plastifiziert und mitverschweisst.

Die Anzahl und Höhe der Noppen sind erfindungsgemäss lediglich so zu bemessen, dass an allen Stellen der zu schaffenden Verbindung der Spalt sich während der Erwärmung gleichmässig stabil hält. Durch den Passsitz auf der Polummantelung und den Anschlag durch die Noppen werden mögliche, geringfügige Verwerfungen des Deckels ausgeglichen.

In der Ausschnittsvergrösserung nach Fig. 1a ist die Führungsleiste 7, die den Deckel beim Auflegen exakt auf dem Behälterrand 6 positioniert deutlich sichtbar. Sie wird in Höhe der Noppen ebenso wie der Behälterrand und die Unterkante des Deckels von der Wärmestrahlung direkt getroffen und zumindest in diesem Bereich mitverschweisst. Ausserdem dient sie als Unterstützung während des Verpressens.

Würden Deckel und Gefäss während der Aufheizphase bündig aufeinanderliegen, so könnte eine filmähnliche Verbindung zwischen den sich berührenden Flächen zustandekommen. Diese Verbindung wäre zunächst zwar auch dicht, würde aber bei mechanischer Belastung der Zelle sehr leicht aufreissen. Eine erfindungsgemäss hergestellte Verbindung gewährleistet hingegen wegen der durchgehenden Materialverschweissung über die volle Wanddicke ein hohes Mass an Stabilität.

## Patentanspruch

Deckel (1) zum Verschliessen eines Behälters (2) aus thermoplastischem Kunststoff für Akkumulatorenzellen, dessen Rand entlang seiner horizontalen Unterseite mit der horizontalen Oberkante (6) des Behälters mittels Strahlungswärme erhitzt und verschweisst wird, dadurch gekennzeichnet, dass der Deckel (1) mittels angespritzter, über die Unterseite seines Randes ringsum verteilter Noppen (5) während der Aufheizphase auf den Rand des Behälters (2) mit Abstand von dessen Oberkante (6) auflegbar ist, und dass die erwärmten Noppen beim darauffolgenden Aufpressen des Deckels auf den Behälter plastifizierbar und verschweissbar sind.

## Claim

Cover (1) for the closing of a container (2) of thermoplastic for battery cells, the rim of which is heated and welded along its horizontal underside to the horizontal upper edge (6) of the container by means of radiant heat, characterized in that the cover (1) can be placed, during the heating-up phase, on the rim of the container (2) at a distance from the upper edge (6) of the latter by means of moulded-on nubs (5) distributed around the underside of its rim, and in that the heated nubs can be plasticized and welded during the subsequent pressing of the cover onto the container.

## Revendication

Couvercle (1) de fermeture d'un récipient (2) en matière thermoplastique pour batterie d'accumulateur dont on chauffe et soude la bordure le long de son côté inférieur avec la bordure supérieure (6) du récipient à l'aide d'un rayonnement calorifique, caractérisé en ce que le couvercle (1) peut être garni par flocage de noppes (5) de tissus réparties sur sa bordure inférieure pendant la phase de chauffage sur la bordure du récipient (2) avec un intervalle par rapport à sa bordure supérieure (6) et en ce que les noppes chauffées sont plastifiables et soudables lors de la compression ultérieure du couvercle contre le récipient.

Fig. 1

Fig. 1a